# DEMANDE DE BREVET EUROPEEN

(11) **EP 2 784 387 A2**
(43) Date de publication de la demande: **01.10.2014**
(21) Numéro de dépôt: 14173075.4
(22) Date de dépôt: 12.08.2009
(51) Int. Cl.: F23G 5/16, F23G 5/32, F23G 7/04, B01J 19/24

(54) **Chambre de combustion pour le traitement thermique d'au moins un effluent comportant des polluants combustibles**

(30) Priorité: 13.08.2008 FR 0855572
(62) Demande divisionnaire de: 09740460.2
(71) Demandeur: Vichem (SA), 1950 Sion (CH)
(72) Inventeur: Sirba, Thierry, 059818 Singapour (SG)
(74) Mandataire: Roman, Alexis

(57) **Abrégé**

L'invention concerne une chambre de combustion pour le traitement thermique d'au moins un effluent comportant des polluants combustibles, dans laquelle:
- la chambre (B) est cylindrique,
- la chambre (B) est pourvue sur sa périphérie d'orifices d'injection (100a,) d'un fluide comburant, lesdits orifices étant distribués sur des cercles espacés axialement et orientés de manière à impartir une trajectoire circulaire ou hélicoïdale audit fluide comburant,

**se caractérisant par le fait que** les orifices d'injection (100a) du fluide comburant sont agencés sous forme d'étages, lesdits orifices étant configurés de sorte que l'injection à chaque étage se fasse avec un angle d'attaque différent.

## Description

### Domaine technique de l'invention.

L'invention a pour objet un procédé de traitement thermique d'au moins un effluent comportant des polluants combustibles. Elle a également pour objet un dispositif pour la mise en oeuvre de ce procédé.

L'invention concerne le domaine technique des procédés et dispositifs de combustion dite à « puits-tourbillon ».

### État de la technique.

La technique de combustion du type à « puits-tourbillon » est bien connue de l'art antérieur. Elle est par exemple décrite dans les brevets FR 2.257.326 (Rhone-Poulenc), EP 0.171.316 (Rhone-Poulenc) ou encore EP 0.598.639 (Rhone-Poulenc), auxquels l'homme du métier pourra se référer.

Dans une première étape de ce procédé, on introduit dans une première zone un fluide comburant et un fluide combustible. Un des deux fluides, habituellement le fluide comburant, est introduit selon une trajectoire hélicoïdale.

On provoque ensuite l'inflammation du mélange comburant-combustible de manière à réaliser, dans la première zone, une phase de combustion, ou flamme, animée d'un mouvement selon une trajectoire hélicoïdale.

On force alors le passage de cette phase de combustion dans une seconde zone, à travers un passage restreint, de manière à lui donner la forme d'un écoulement puits-tourbillon à symétrie axiale. Cet écoulement puits-tourbillon correspond sensiblement à un mouvement des gaz selon un ensemble de trajectoires hyperboloïdiques dont les génératrices reposent sur une famille de cercles localisés au niveau du passage restreint, avant de diverger dans toutes les directions dans la seconde zone. Cet écoulement puits-tourbillon est remarquable en ce qu'une zone en dépression relative se créée au niveau de l'axe de symétrie.

L'effluent à traiter est introduit au niveau de la zone de symétrie axiale de l'écoulement puits-tourbillon. On entend selon la présente invention par « zone de symétrie axiale », la zone en dépression s'étendant au voisinage de l'axe de symétrie de l'écoulement puits-tourbillon. Dans le cas d'un effluent liquide, par suite d'un transfert de quantité de mouvement entre ledit effluent et la phase de combustion, l'effluent est pulvérisé en un spectre de fines particules iso-réparties à l'entrée de la seconde zone, lesdites particules étant ensuite vaporisées d'une manière homogène et rapide. Ce type de pulvérisation est communément appelé « pulvérisation vaporisante ».

Ce procédé permet d'obtenir à la sortie de la seconde zone un effluent propre débarrassé de ses impuretés polluantes, avec des rendements de destruction proche de 99 %.

Le brevet EP 0.128.792 (Rhone-Poulenc) enseigne à l'homme du métier d'introduire un second fluide comburant dans la seconde zone, avec une composante tangentielle à l'écoulement puits-tourbillon. En pratique, le second fluide comburant est introduit de manière hélicoïdale dans la seconde zone. Cette étape permet d'éviter une mauvaise dispersion d'un effluent comportant des polluants difficilement inflammables et une combustion incomplète à haute température. La demanderesse a toutefois pu constater que l'injection d'un second fluide comburant n'augmentait pas de manière significative le rendement global de destruction.

En particulier, la demanderesse a pu observer que dans la seconde zone, les gradients de température variaient aux différents points de la flamme. De plus, l'oxydation des particules pulvérisées ne semble pas non plus homogène aux différents points de la flamme, le second fluide comburant étant massivement présent au niveau de la périphérie de ladite flamme et pratiquement absente des couches de diamètres inférieurs. Il en résulte une flamme relativement longue, laissant subsister quelques résidus de combustion à la sortie de la seconde zone. Cet état des choses, impose d'avoir une seconde zone relativement longue (7 m à 8 m) et de prévoir des systèmes de filtration en aval de la seconde zone.

Également, la demanderesse a pu observer que la température de la flamme à la sortie de la seconde zone était voisine de 800°C-1000°C, qui est une zone de température critique favorable à la formation de résidus indésirables tels que dioxine, NOₓ, produits chlorés, bromés, fluorés, etc.

Face à cet état des choses, le problème technique principal que vise à résoudre l'invention est d'améliorer la combustion des particules pulvérisées dans la seconde zone de combustion afin d'augmenter le rendement de destruction et réduire les émissions polluantes (dioxines, NOₓ, ...).

Un autre objectif de l'invention est, dans la seconde zone de combustion, de tendre vers la maîtrise de la température de la flamme, sensiblement en tout point de cette dernière.

Encore un autre objectif de l'invention est d'améliorer l'oxydation des particules pulvérisées en tout point de la flamme.

L'invention a également pour objectif de proposer un dispositif de conception simple, permettant d'efficacement mettre en oeuvre le présent procédé.

### Divulgation de l'invention.

La solution proposée par l'invention est un procédé de traitement thermique d'au moins un effluent comportant des polluants combustibles, ledit procédé étant du type connu de l'art antérieur, c'est-à-dire dans lequel :
- on introduit dans une première zone un premier fluide comburant et un fluide combustible, ledit premier fluide comburant et/ou ledit fluide combustible étant introduits selon une trajectoire hélicoïdale,
- on provoque l'inflammation du mélange comburant-combustible de manière à réaliser dans la première zone une phase de combustion animée d'un mouvement selon une trajectoire hélicoïdale,
- on force le passage de ladite phase de combustion dans une seconde zone, au travers d'un passage restreint de manière à lui donner la forme d'un écoulement puits-tourbillon à symétrie axiale,
- on introduit l'effluent à traiter au niveau de la zone de symétrie axiale dudit écoulement puits-tourbillon,
- on introduit un second fluide comburant dans la seconde zone avec une composante tangentielle à l'écoulement puits-tourbillon.

Le dispositif objet de l'invention est remarquable en ce que l'injection du second fluide comburant est réalisée de manière étagée avec un angle d'attaque différent à chaque étage. Cette injection spécifique permet de disperser intimement et progressivement, le second fluide comburant dans toute l'épaisseur de la flamme. On obtient au final une flamme plus courte (2m à 3m) que celle obtenue avec les procédés de l'art antérieur et en particulier celui décrit dans le brevet EP 0.128.792, avec un rendement de destruction voisin de 99.99 %, sans émission de dioxine, de NOₓ, les produits organo-halogénés sont détruits, et les fumées contenant les acide d'halogènes correspondant sous forme recyclable ou valorisable peuvent être absorbés dans les étages de traitement et d'absorption. Il n'y a plus d'omission ou de répétition dans la prise en charge et le traitement thermique de résidus.

Et préférentiellement le second fluide comburant est introduit en au moins deux étages dans la seconde zone, le premier étage correspondant à un défaut en comburant, le second étage correspondant à au moins la stoechiométrie.

Le brevet EP 0.232.658 (Rhone-Poulenc) enseigne à l'homme du métier d'étager la combustion dans la première zone du dispositif, avant le rétrécissement permettant de créer l'écoulement puits-tourbillon. Le premier étage correspond à un défaut en comburant et le second étage permet d'atteindre, voire dépasser, la stoechiométrie. Un troisième étage correspond à une dilution pour diminuer la température de la flamme. On obtient au final une flamme très courte, à haute intensité de combustion, avec des températures très élevées supérieures à 1000°C. L'étagement est réalisé en introduisant une zone centrale spécifique dans la première zone. Ce brevet n'enseigne toutefois pas à l'homme du métier d'étager la combustion dans la seconde zone. En tout état de cause, ce brevet ne prévoit pas d'injecter le fluide comburant avec un angle d'attaque différent à chaque étage.

L'autre aspect de l'invention concerne un dispositif pour la mise en oeuvre du procédé décrit précédemment, comportant :
- une première chambre cylindrique équipée :
   o d'un moyen pour introduire un fluide comburant et d'un moyen pour introduire un fluide combustible, au moins un desdits moyens étant configuré pour introduire le comburant et/ou le combustible selon une trajectoire hélicoïdale,
   o d'un moyen pour enflammer le mélange comburant-combustible,
   o d'un rétrécissement disposé en aval de ladite première chambre sur l'axe de symétrie de celle-ci
- une seconde chambre cylindrique coaxiale à la première chambre et communiquant avec cette dernière au niveau du rétrécissement, ladite seconde chambre étant pourvue sur sa périphérie d'orifices d'injection d'un second fluide comburant, lesdits orifices étant distribués sur des cercles espacés axialement et orientés de manière à impartir une trajectoire circulaire ou hélicoïdale audit second fluide comburant,
- une tubulure pour introduire l'effluent à traiter dans la seconde chambre juste au niveau du rétrécissement, sur l'axe de symétrie de ladite seconde chambre,
ledit dispositif étant remarquable en ce que les orifices d'injection du second fluide comburant sont agencés sous forme d'étages, lesdits orifices étant configurés de sorte que l'injection à chaque étage se fasse avec un angle d'attaque différent.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 est une vue schématique en coupe transversale d'un dispositif pour la mise en oeuvre du procédé objet de l'invention,
- la figure 2 est une vue en coupe selon A-A du dispositif de la figure 1, montrant le premier étage d'injection du second fluide comburant,
- la figure 3 est une vue en coupe selon B-B du dispositif de la figure 1, montrant le second étage d'injection du second fluide comburant,
- la figure 4 est une vue en coupe selon C-C du dispositif de la figure 1, montrant un troisième étage d'injection du second fluide comburant,
- la figure 5 est une vue schématique de profil d'une tubulure permettant d'introduire un ou plusieurs effluents à traiter,
- la figure 6 est une vue agrandie de la coupe selon D-D de la tubulure de la figure 5,
- la figure 7 est une vue agrandie de la coupe selon D-D de la tubulure de la figure 5, dans une variante de réalisation.

### Modes de réalisation de l'invention.

Le procédé objet de l'invention est utilisable pour tout type d'effluents liquides et/ou gazeux comportant des polluants combustibles facilement ou difficilement inflammables. On peut citer comme exemples les eaux polluées par des composés organiques et/ou inorganiques polluants combustibles (par exemple eau salée avec matières organiques), les acides sulfuriques résiduaires, les combustibles visqueux et hautement chlorés, les solvants résiduaires chlorés, bromés ou fluorés, les boues contenant des nitrates métalliques, des oxydes et/ou des hydroxydes, eau chargée en charbon, etc.

Le principe du procédé objet de l'invention va être décrit plus en détail en se référant aux figures annexées. On introduit dans une première zone A, un premier fluide comburant et un fluide combustible. La première zone A est assimilable à une chambre de pré-combustion. Généralement ces deux fluides sont utilisés sous forme gazeuse. On utilise habituellement comme premier fluide comburant l'air éventuellement enrichi en oxygène, de l'oxygène pur ou un autre fluide comburant convenant à l'homme du métier. Le fluide combustible peut être un gaz tel que le méthane ou le propane ou un hydrocarbure léger par exemple. Au moins un de ces deux fluides, généralement le premier fluide comburant, est introduit dans la première zone A selon une trajectoire hélicoïdale. Ce fluide est introduit avec une légère surpression par rapport à la pression régnant en aval de la première zone A, généralement inférieur à 1 bar, avantageusement comprise entre 0,2 et 0,7 bar, préférentiellement 0,5 bar.

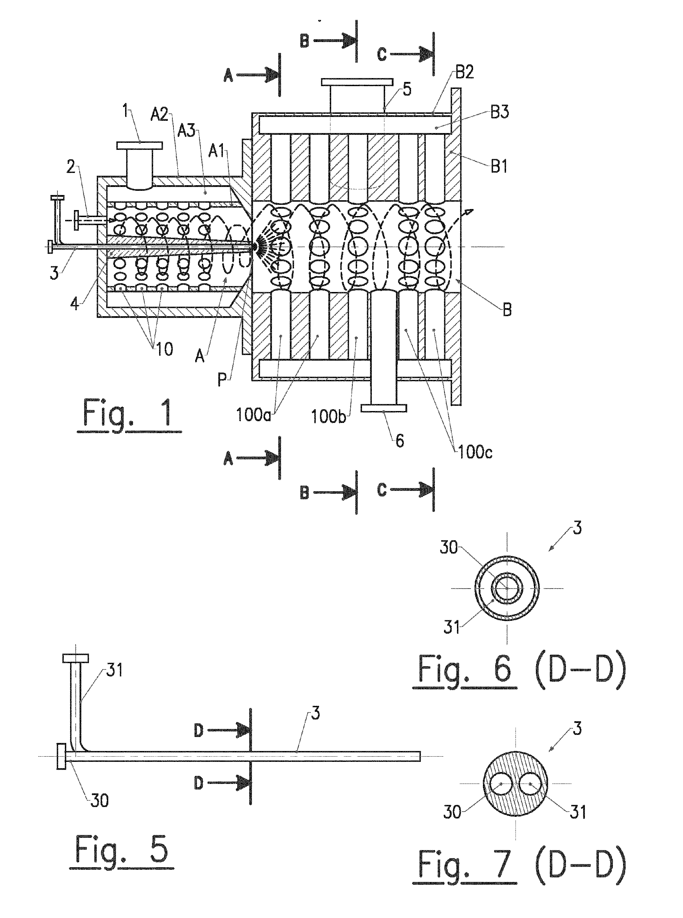

On provoque l'inflammation du mélange comburant-combustible de manière à réaliser, dans la première zone A, une phase de combustion qui sera elle-même animée d'un mouvement selon une trajectoire hélicoïdale (représentée en pointillés sur la figure 1).

On force ensuite le passage de la phase de combustion dans la seconde zone B précitée, au travers un passage restreint P de manière à lui donner la forme d'un écoulement puits-tourbillon à symétrie axiale (représentée en pointillés sur la figure 1). Cet écoulement présente une zone de dépression au niveau de sa zone de symétrie axiale. La seconde zone B peut être assimilée à une chambre de combustion.

On introduit alors l'effluent à traiter au niveau de la zone de symétrie axiale de cet écoulement puits-tourbillon. Préférentiellement, l'effluent à traiter est introduit axialement dans la zone de symétrie axiale de l'écoulement puits-tourbillon, au voisinage immédiat du passage restreint P, en amont ou en aval de celui-ci ou au niveau même dudit passage. L'effluent se trouve aspiré puis, par suite d'un transfert de quantité de mouvement entre l'effluent et la phase de combustion, il est pulvérisé en un spectre de fines particules. Comme cela est préconisé dans le brevet EP 0.128.792 précité, on introduit l'effluent à une vitesse inférieure à 10 m/s et plus particulièrement à 5 m/s de manière à ne pas devoir trop augmenter la quantité de mouvement initiale de la phase de combustion, le rapport des quantités de mouvement de ces deux éléments étant au moins égal à 100, de préférence compris entre 1.000 et 10.000. D'autre part, on travaille dans des conditions telles que la température atteinte par l'effluent après vaporisation est supérieure à la température d'auto-inflammation de celui-ci.

Selon une caractéristique avantageuse de l'invention, on peut introduire plusieurs effluents à traiter au niveau de la zone de symétrie axiale de l'écoulement puits-tourbillon. Chaque effluent est introduit coaxialement ou parallèlement à l'axe de symétrie de l'écoulement puits-tourbillon. L'introduction coaxiale semble générer une meilleure homogénéité dans la pulvérisation. On peut par exemple injecter des effluents qui ne doivent pas être mélangés avant pulvérisation et de manière générale des produits non miscibles entre eux, tels que des polymères et un acide ou une base dont le mélange risque de former une précipitation difficilement traitable.

Un second fluide comburant est introduit dans la seconde zone B avec une composante tangentielle à l'écoulement puits-tourbillon. En pratique, le second fluide comburant est utilisé sous forme gazeuse. On peut utiliser de l'air éventuellement enrichi en oxygène, de l'oxygène pur ou un autre fluide comburant convenant à l'homme du métier. Ce second fluide comburant est introduit avec une légère surpression par rapport à la pression régnant en aval de la seconde zone B, généralement d'au plus 1 bar, avantageusement comprise entre 0,2 et 0,7 bar, préférentiellement 0,5 bar. On introduit le second fluide comburant à une vitesse comprise entre 5 m/s et 40 m/s et plus particulièrement entre 23 m/s et 30 m/s.

Le rapport massique de la quantité de fluide comburant introduite dans la seconde zone B par rapport à celle introduite dans la première zone A est de l'ordre de 1 à 4, préférentiellement 25% du fluide comburant est utilisé en première zone A , et les 75% restant sont introduits en zone B.

Conformément à l'invention, on injecte la second fluide comburant de manière étagée avec un angle d'attaque différent à chaque étage de façon à disperser intimement et de manière graduée, ledit second fluide comburant dans toute l'épaisseur de la flamme pour qu'il atteigne toutes les particules à brûler.

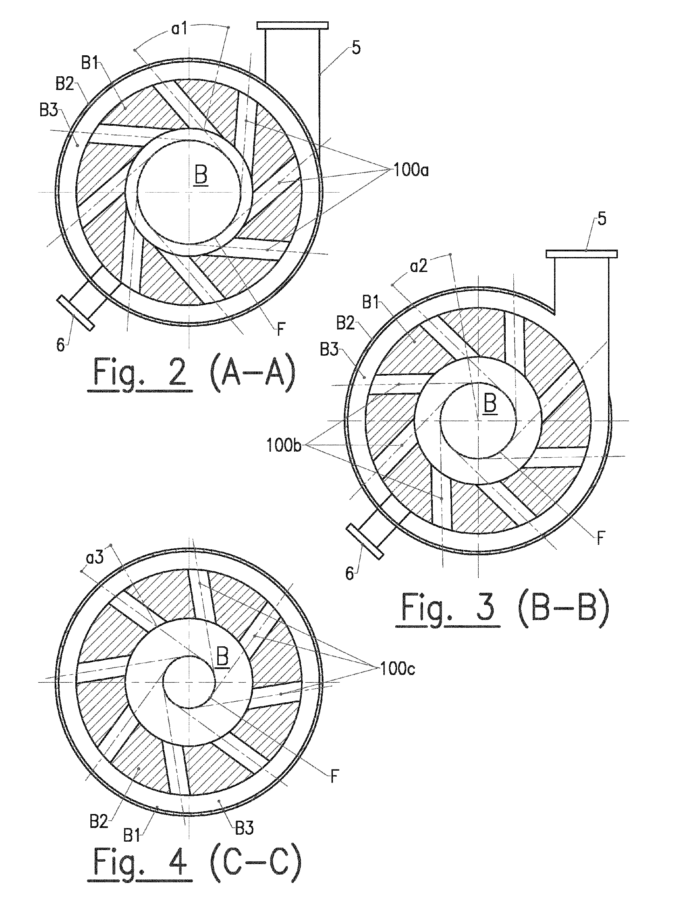

Le second fluide comburant est introduit en au moins deux étages dans la seconde zone B, le premier étage correspondant à un défaut en comburant, le second étage correspondant à au moins la stoechiométrie. L'injection du second fluide comburant au second étage se fait avec un angle d'attaque inférieur à celui du premier étage (figures 2 et 3). De cette manière, le second fluide comburant est susceptible de pénétrer plus profondément dans l'épaisseur de la flamme et d'atteindre toutes les particules dispersées dans les différentes couches de la flamme. En pratique, le débit d'injection du second fluide comburant au premier et au second étage est variable selon le type et le débit de l'effluents à traiter. On aboutit a une flamme très courte, en tout cas optimisée au volume de la seconde zone B, avec un profil de vitesse pratiquement plat qui assure un écoulement du type « piston » (avancée constante de front d'oxydation de la flamme), une oxydation quasi-parfaite ainsi qu'un gradient de température quasi-constant en tout point de la flamme.

Le second fluide comburant peut être introduit dans la seconde zoneB sur un troisième étage correspondant à un excès de comburant. Dans ce cas, l'injection du second fluide comburant au troisième étage se fait avec un angle d'attaque inférieur à celui du second étage (figures 3 et 4). Le second fluide comburant est ainsi susceptible de pénétrer encore plus profondément dans l'épaisseur de la flamme pour la diluer, ce qui permet de contrôler sa température. La quantité d'air injectée au niveau du troisième étage dépendra de la température souhaitée de la flamme à la sortie de la seconde zone B. En pratique, cette température de sortie dépend des normes imposées. En tout état de cause, plus la température de la flamme augmente dans la seconde zone B, plus on injecte de second fluide comburant pour maintenir une température de flamme constante. Et cette température est quasiment constante en tout point de la flamme grâce à l'injection étagée avec des angles d'injection différents.

Les figures 2, 3 et 4, illustrent les différents angles d'injection à chaque étage. L'injection du second fluide comburant est réalisée avec une composante tangentielle à l'écoulement puits-tourbillon de manière à imprimer un mouvement de rotation globale audit écoulement. En pratique, l'injection du second fluide comburant est réalisée selon une trajectoire circulaire ou hélicoïdale dans la seconde zone B. Au premier étage (figure 2), on balaye la zone périphérique de l'écoulement puits-tourbillon, c'est-à-dire la zone périphérique de la flamme F. L'angle a1 d'injection au premier étage est compris entre 45° et 90°, préférentiellement entre 50° et 60° par rapport à la normale. Au second étage (figure 3), on balaye une zone de la flamme F ayant un diamètre plus petit. L'angle a2 d'injection au second étage est compris entre 30° et 75°, préférentiellement entre 35° et 45° par rapport à la normale. Au troisième étage (figure 4), on balaye une zone de la flamme F ayant un diamètre encore plus petit. L'angle a3 d'injection au troisième étage est compris entre 15° et 60°, préférentiellement entre 20° et 30° par rapport à la normale. En pratique on respecte la relation suivante : a1>a2>a3 avec une incrémentation de l'angle d'environ -15° à chaque étage.

Prenons le cas où l'effluent à traiter contient des composés organiques : au premier étage, il se produit une inflammation des particules pulvérisées, à température modeste, de l'ordre de 800°C-1000°C. Pour les composés organiques, le manque d'oxygène implique la formation de radicaux de craquage (méthyle, alkyle) sans production de dioxine, de NOₓ, de produits chlorés, fluorés, bromés, ou autres. Les radicaux de craquage sont en attente d'oxygène afin de pouvoir brûler complètement. Au second étage, le second fluide comburant est donc introduit de manière à ce que l'oxygène injecté oxyde tous ces radicaux de craquage : on est à l'équilibre et la température de la flamme augmente à environ 1300°C-1400°C. Au troisième étage, le second fluide comburant est donc introduit en excès pour maîtriser la température de la flamme à la sortie de la seconde zone B, qui est supérieure à 1400°C.

Afin d'améliorer la compréhension du procédé précité, un dispositif permettant la mise en oeuvre de l'invention va maintenant être décrit plus en détail en se référant aux figures annexées. En se rapportant à la figure 1, la première zone A est assimilable à une première chambre cylindrique équipée d'un moyen 1 pour introduire un fluide comburant et d'un moyen 2 pour introduire un fluide combustible, au moins un desdits moyens étant configuré pour introduire le comburant et/ou le combustible selon une trajectoire hélicoïdale. En pratique, un cylindre interne A1 et un cylindre externe A2 coaxiaux délimitent un espace annulaire A3 autour de la chambre A. Une entrée tangentielle 1 reliée à l'alimentation en premier fluide comburant est fixée sur la paroi du cylindre externe A2 et débouche dans l'espace annulaire A3. Le cylindre interne A1 comprend plusieurs séries de perforations 10 débouchant d'une part dans l'espace annulaire A3 et d'autre part dans la chambre A. Les perforations 10 sont réparties sur des séries de cercles espacés axialement. La partie amont de la chambre A est équipée d'un orifice 2 permettant d'injecter le fluide combustible. Dans une variante de réalisation non représentée, cet orifice 2 pourrait déboucher dans l'espace annulaire A3. La partie avale de la chambre A se termine par un rétrécissement P, ou divergent, disposé sur l'axe de symétrie de ladite chambre. La seconde zone B est assimilable à une seconde chambre cylindrique coaxiale à la première chambre A et communiquant avec cette dernière au niveau du rétrécissement P.

La première chambre A est en outre munie d'une tubulure 3 permettant d'introduire l'effluent à traiter dans la seconde chambre B juste au niveau du rétrécissement P, sur l'axe de symétrie de ladite seconde chambre. Cette tubulure 3 est entourée d'une garniture isolante 4 en forme de cône. En se rapportant plus spécifiquement aux figures 5 à 7, la tubulure 3 peut comporter plusieurs canaux 30, 31, destinés à introduire plusieurs effluents à traiter dans la seconde chambre B. Ces canaux 30, 31 peuvent être coaxiaux (figure 6) ou parallèles entre eux (figure 7). Dans une variante d'utilisation, la tubulure 3 peut comporter plusieurs canaux, un premier canal étant destiné à introduire l'effluent dans la seconde chambre, un second canal servant à faire circuler un fluide permettant de réchauffer ledit effluent avant son introduction dans la seconde chambre B.

Le fonctionnement du dispositif décrit ci-dessus est bien connu de l'homme du métier : le premier fluide comburant est introduit dans l'entrée tangentielle 1 et pénètre dans la premier chambre A via les perforations 10. Ces dernières inculquent au premier fluide comburant une trajectoire hélicoïdale. Le fluide combustible est introduit via l'orifice 2 et se mélange intimement avec le premier fluide comburant. Le mélange comburant-combustible est alors enflammé au moyen d'une flamme ou d'une étincelle provoquée dans la première chambre A. Au passage du rétrécissement P, la phase de combustion va être animée du mouvement puits-tourbillon décrit précédemment. L'effluent introduit au niveau du rétrécissement P va alors se pulvériser dans l'écoulement puits-tourbillon.

La seconde chambre B est pourvue sur sa périphérie d'orifices 100a, 100b, 100c permettant d'injecter le second fluide comburant, lesdits orifices étant distribués sur des cercles espacés axialement et orientés de manière à impartir une trajectoire circulaire ou hélicoïdale audit second fluide. Conformément à l'invention, les orifices d'injection 100a, 100b, 100c sont agencés sous forme d'étages, lesdits orifices étant configurés de sorte que l'injection à chaque étage se fasse avec un angle d'attaque a1, a2, a3 différent. Chaque étage peut comporter une ou plusieurs séries d'orifices d'injection. Les orifices d'injection 100a, 100b, 100c de chaque étage sont calibrés de manière à définir une vitesse d'injection et un débit de second fluide comburant qui dépendent de la nature de l'effluent à traiter.

En se rapportant aux figures 1 à 4, un cylindre interne B1 et un cylindre externe B2 coaxiaux délimitent un espace annulaire B3 autour de la seconde chambre B. Une entrée tangentielle 5 reliée à un unique injecteur de second fluide comburant est fixée sur la paroi du cylindre externe B2 et débouche dans l'espace annulaire B3. En pratique, l'entrée tangentielle 5 est reliée à un unique ventilateur, ou pompe, permettant l'introduction d'air. Le cylindre interne B1 est pourvu des différents orifices d'injection 100a, 100b, 100c. Le second fluide comburant est introduit dans l'entrée tangentielle 5 et pénètre dans la seconde chambre B via les orifices d'injection 100a, 100b, 100c, ces derniers inculquant audit fluide une trajectoire circulaire ou hélicoïdale. La seconde chambre B comporte au moins deux étages d'orifices d'injection, les orifices 100b du second étage ayant un angle d'attaque a2 inférieur à celui a1 des orifices 100a du premier étage. La seconde chambre B peut comporter un troisième étage d'orifices d'injection 100c distant axialement des deux autres, les orifices 100c dudit troisième étage ayant un angle d'attaque a3 différent de ceux a1, a2 des orifices 100a, 100b des deux autres étages. Préférentiellement, les orifices 100c du troisième étage ont un angle d'attaque a3 inférieur à celui a2 des orifices 100b du second étage.

Dans une variante de réalisation non représentée, chaque étage d'orifices 100a, 100b, 100c est relié à son propre injecteur de second fluide comburant. Cela permet de régler indépendamment les débits d'injection au niveau de chaque étage. En particulier, il peut être avantageux d'injecter un débit plus important au niveau du troisième étage de dilution afin de contrôler plus précisément la température de la flamme à la sortie de la seconde chambre B en fonction des normes imposées.

En se rapportant à la figure 1, il est possible d'injecter dans la seconde chambre B, un second effluent gazeux à traiter. Cet effluent est typiquement un gaz issu des traitements de combustion de produits chlorés, soufrés ou fluorés. L'injection est réalisée via une (ou plusieurs) tubulure 6, fixée sur le cylindre extérieur B2 et débouchant directement dans la seconde chambre B. La tubulure 6 est avantageusement orientée de manière à impartir une trajectoire circulaire ou hélicoïdale au second effluent gazeux bien que l'injection puisse être radiale. L'objectif est d'utiliser la cinétique de la flamme pour traiter cet effluent. En pratique, la tubulure 6 est avantageusement disposée directement après le second étage d'injection du second comburant, et avant le troisième étage. On introduit le second effluent gazeux à une vitesse d'environ 20 m/s, et avec une légère surpression par rapport à la pression régnant en aval de la seconde zone B, généralement d'environ 0,1 bar.

Le tableau 1 suivant donne des exemples de débits d'injection de second fluide comburant en fonction de différents types d'effluents à traités et de l'étage d'injection. L'effluent liquide est introduit au niveau de la zone de symétrie axiale de l'écoulement puits-tourbillon et l'effluent gazeux est introduit au niveau de la tubulure 6.

**Tableau 1**

| **Effluent** | **Débit effluent (Kg/H)** | **Second fluide comburant** | **Débit 1er étage (Kg/H)** | **Débit 2nd étage (Kg/H)** |
|---|---|---|---|---|
| Résidus chlorés (VCM) | effluents gazeux: 2000 | air | 2000 | 12000 |
| | effluents liquide: 900 | | | |
| Résidus chlorés contenant des sels | effluents gazeux: 9000 | air | 3000 | 17000 |
| | effluents liquide: 1500 | | | |

## Revendications

1. Chambre de combustion pour le traitement thermique d'au moins un effluent comportant des polluants combustibles, dans laquelle:
- la chambre (B) est cylindrique,
- la chambre (B) est pourvue sur sa périphérie d'orifices d'injection (100a, 100b, 100c) d'un fluide comburant, lesdits orifices étant distribués sur des cercles espacés axialement et orientés de manière à impartir une trajectoire circulaire ou hélicoïdale audit fluide comburant,
**se caractérisant par le fait que** les orifices d'injection (100a, 100b, 100c) du fluide comburant sont agencés sous forme d'étages, lesdits orifices étant configurés de sorte que l'injection à chaque étage se fasse avec un angle d'attaque différent.

2. Chambre de combustion selon la revendication 1, comportant au moins deux étages d'orifices d'injection (100a, 100b).

3. Chambre de combustion selon la revendication 2, dans laquelle les orifices d'injection (100b) du second étage ont un angle d'attaque (a2) inférieur à celui (a1) des orifices (100a) du premier étage.

4. Chambre de combustion selon l'une des revendications 2 ou 3, dans laquelle la chambre (B) comporte un troisième étage d'orifices d'injection (100c) distant axialement des deux autres, les orifices dudit troisième étage ayant un angle d'attaque (a3) différent de ceux (a1, a2) des orifices (100a, 100b) des deux autres étages.

5. Chambre de combustion selon la revendication 4 prise en combinaison avec la revendication 3, dans laquelle les orifices d'injection (100c) du troisième étage ont un angle d'attaque (a3) inférieur à celui des orifices (100b) du second étage.

6. Chambre de combustion selon l'une des revendications 2 à 5, dans laquelle chaque étage d'orifices d'injection (100a, 100b, 100c) est relié à son propre injecteur de fluide comburant.

7. Chambre de combustion selon l'une des revendications 2 à 5, comprenant un cylindre interne (B1) et un cylindre externe (B2) coaxiaux délimitant un espace annulaire (B3), ledit cylindre interne étant pourvu des différents orifices d'injection (100a, 100b, 100c) du fluide comburant, lesdits orifices débouchant dans ledit espace annulaire, ce dernier étant relié à un unique injecteur de fluide comburant.

8. Chambre de combustion selon la revendication 7, dans laquelle une entrée tangentielle (5) est reliée à un unique injecteur de fluide comburant, laquelle entrée est fixée sur la paroi du cylindre externe (B2) et débouche dans l'espace annulaire (B3).

9. Chambre de combustion selon la revendication 8, dans laquelle l'entrée tangentielle (5) est reliée à un unique ventilateur, ou pompe, permettant l'introduction d'air.

10. Chambre de combustion selon l'une des revendications 7 à 9, dans laquelle l'injection d'un second effluent gazeux à traiter est réalisée via une ou plusieurs tubulures (6), laquelle tubulure est fixée sur le cylindre extérieur (B2) et débouche directement dans ladite chambre (B).

11. Chambre de combustion selon la revendication 10, dans laquelle la tubulure (6) est orientée de manière à impartir une trajectoire circulaire, hélicoïdale ou radiale au second effluent gazeux.

12. Chambre de combustion selon la revendication 10 prise en combinaison avec la revendication 4, dans laquelle la tubulure (6) est disposée directement après le second étage d'injection du fluide comburant, et avant le troisième étage.
